# EUROPEAN PATENT SPECIFICATION

(11) **EP 4 142 185 B1**
(45) Date of publication and mention of the grant of the patent: **17.12.2025**
(21) Application number: 21192652.2
(22) Date of filing: 23.08.2021
(51) Int. Cl.: H04B 10/112, H04B 10/118

(54) **FREE SPACE OPTICAL COMMUNICATION TERMINAL AND METHOD**
ENDGERÄT UND VERFAHREN FÜR OPTISCHE FREIRAUMKOMMUNIKATION
TERMINAL ET PROCÉDÉ DE COMMUNICATION OPTIQUE EN ESPACE LIBRE

(43) Date of publication of application: 01.03.2023
(73) Proprietor: Airbus (S.A.S.), 31700 Blagnac (FR)
(72) Inventor: Comin, Alberto, 82024 Taufkirchen (DE); Barrios, Ricardo, 82024 Taufkirchen (DE); Tepper, Jan, 82024 Taufkirchen (DE)
(74) Representative: KASTEL Patentanwälte PartG mbB

(56) References cited:
- CN-U- 210 780 813
- US-A- 5 530 577
- US-B1- 10 637 572
- US-B1- 7 277 641
- US-B2- 7 609 972

## Description

The invention relates to a free space optical communication terminal and an associated method.

In optical comms it is common to have different terminals at the two sides of a communication link. The reason is that in typical scenarios, such as light ground-satellite or ground-aircraft links, the two communication partners are very different. Additionally, the propagation through atmosphere may affect the uplink and downlink differently due to turbulence strength decrease at higher altitudes above ground. The issue may arise in meshed networks between identical partners, e.g. an aircraft-aircraft network, typically because designing an optical terminal which is compatible with itself is rather challenging. In a communication link, one terminal transmits using one channel (e.g. a specific wavelength) and receives using another channel (i.e. a different specific wavelength); the roles of the two channels are switched for the second terminal. This is the same situation as for common serial cables, where there is one Rx and one Tx wire, and, to communicate between two devices one needs either to swap the Rx and Tx wires inside the cable (the twisted cable) or have different types of serial ports on the two devices. Since there is no possibility to swap the Rx and Tx channels within the atmosphere, different terminals on each side of the link are commonly used.

US 10 637 572 B1 discloses a full duplex dual red/blue wavelength communication architecture and method that allows enhanced network configuration flexibility by enabling terminal switching between red and blue configurations, thereby enabling wavelength reconfiguration within the network on command while the terminal is in the field, airborne, or on orbit.

CN 210 780 813 U discloses a high-isolation common-frequency space laser communication light path for receiving and transmitting with the same polarization state that comprises a laser communication terminal structure frame body, a back reflection surface of a front optical system, a lambda/4 wave plate, a polarization beam splitter, an energy beam splitter, a signal communication receiving channel, a signal tracking and capturing channel and a signal light emitting branch, wherein the back reflection surface is arranged in the laser communication terminal structure frame body.

US 5 530 577 A discloses an optical communication apparatus that includes a polarization beam splitter which synthesizes an optical axis of a light emitting optical system having a light emission element for emitting a linearly polarized light and an optical axis of a light receiving optical axis to make the optical axis for reception coincide with the optical axis for transmission. A phase plate is provided in such a manner as to be rotatable by a predetermined angle about the common axis. An optical axis of the phase plate of each of the associated communication apparatuses is set at an adequate angle before installation thereof.

US 7 277 641 B1 discloses a multiple access space laser communications optical system. Multiple optical signals containing a number of channels are simultaneously received and demultiplexed at a multiple access communication device. Separate communication signals may be multiplexed by the multiple access communication device, and transmitted through the same or a different telescope optical assembly used to receive communication signals. Double-pass reflection is used to selectively polarize signals and to ensure that signals are substantial normal to optical bandpass filters, to avoid large shifts in the wavelengths transmitted by the optical bandpass filters. The system is capable of providing discrete communications with a number of communication endpoints, regardless of where the communication endpoints are located within the field of view of the telescope optical assembly.

US 7 609 972 B2 discloses a technique for acquiring and tracking terminals in a free-space laser communication system involves exchanging beacon laser beams between the terminals to acquire and then track the terminals such that data laser beams exchanged by the terminals for communication are steered based on feedback from detection of the beacon laser beams. The beacon laser beams used for acquisition have a greater beam divergence than those used for tracking. Gimbals provide coarse steering of the data laser beams, and steering mirrors provide fine steering. GPS position data exchanged via an RF link can be used for initial pointing of the beacon laser beams for acquisition. The beacon laser beams can be chopped such that all terminals can use the same beacon wavelength and are distinguished by using different chopping frequencies. By detecting a chopped signal, the position sensor detector can be AC coupled to reduce sensitivity to solar radiation and glint.

It is the object of the invention to improve free space optical communications terminals to be self-compatible.

The invention provides a free space optical communication terminal according to claim 1.

Preferably, the optical input/output assembly includes a beam splitter means that is configured such that the outgoing beam is routed from the laser source towards free space and that the incoming beam is routed from free space towards the photo detecting apparatus depending on the respective beam polarization.

Preferably, the outgoing beam is reflected by the beam splitter means. Preferably, the laser source generates the outgoing beam with s-polarization. Preferably, the beam splitter means reflect s-polarization. Preferably, the incoming beam is transmitted by the beam splitter means. Preferably, the beam splitter means transmit p-polarization. Preferably, the beam splitter means include a polarizing beam splitter. Preferably, the optical input/output assembly includes a plurality of stacked polarizing elements that are arranged along the incoming beam direction before the beam splitting means. Preferably, the optical input/output assembly includes a polarization isolating means, such as a Faraday isolator, that is arranged along the outgoing beam direction, before the beam splitting means.

Preferably, the laser source is configured for generating the outgoing beam with linear polarization, wherein the optical input/output assembly is configured for changing an outgoing beam polarization from a first linear polarization to a first elliptical or circular polarization and for changing an incoming beam polarization from a second elliptical or circular polarization to a second linear polarization, wherein the second linear polarization is different from the first linear polarization.

Preferably the first and second linear polarizations are orthogonal to each other. Preferably, the first and second elliptical or circular polarizations are opposite to each other.

Preferably, the optical input/output assembly includes a polarization changing means that is configured such that the outgoing beam polarization is changed from the first linear polarization to the first elliptical or circular polarization and that the incoming beam polarization is changed from the second elliptical or circular polarization to the second linear polarization.

Preferably, the polarization changing means is arranged along the path of the outgoing beam after the beam splitter means. Preferably, the polarization changing means is arranged along the path of the incoming beam before the beam splitter. Preferably, the polarization changing means is configured to change the outgoing beam polarization from s-polarization to the first elliptical or circular polarization. Preferably, the polarization changing means changes s-polarization to the first circular polarization. Preferably, the polarization changing means is configured to change the incoming beam polarization from the second elliptical or circular polarization to p-polarization. Preferably, the polarization changing means includes a quarter-wave plate.

Preferably, the optical link includes a plurality of channels that are defined by different central wavelengths of the laser pulses, wherein the laser source is configured to generate the outgoing beam having laser pulses with different central wavelengths. Preferably, the optical link includes a plurality of channels that are defined by different central wavelengths, wherein the same channel is configured as a Tx channel and an Rx channel, wherein the Tx channel and the Rx channel are isolated due to the respective beam polarization.

Preferably, the tunable wavelength filter means includes a tunable bandpass filter. Preferably, the other tunable wavelength filter means includes a tunable bandpass filter.

Preferably, the laser source includes a laser booster amplifier that is configured to operate in saturation mode, in order to amplify the outgoing laser pulses. Preferably, the laser booster amplifier is a fiber amplifier.

Preferably, the photo detecting apparatus includes a laser pre-amplifier that is configured to operate in low-noise mode, in order to amplify the incoming laser pulses while adding a minimum of noise. Preferably, the laser pre-amplifier is a fiber amplifier.

The invention provides a free space optical communications arrangement comprising a first free space optical communication terminal and a second free space optical communication terminal, wherein both terminals are configured as described before.

The invention provides a free space optical communication method according to claim 9.

Preferably, the outgoing beam is reflected towards free space and the incoming beam is transmitted from free space by a beam splitter means.

Preferably, the laser source generates the outgoing beam with linear polarization and the optical input/output assembly changes an outgoing beam polarization from a first linear polarization to a first elliptical or circular polarization and changes an incoming beam polarization from a second elliptical or circular polarization to a second linear polarization, wherein the second linear polarization is different from the first linear polarization.

The laser source generates the outgoing beam having laser pulses with a different central wavelength for each channel of the optical link.

Preferably, the outgoing beam is amplified by a laser booster amplifier that operates in saturation mode.

Preferably, the incoming beam is amplified by a laser pre-amplifier that operates in low-noise mode, so that the incoming laser pulses are amplified with a minimum of noise.

One idea to achieve the object is to duplicate functionality, e.g. both terminals can receive and transmit at two different wavelengths. This can be accomplished by duplicating the number of transceivers of SFP modules. Another idea is to implement a reconfigurable terminal, so that one terminal can be switched between a first configuration, in which it transmits using a first wavelength and receive using a second wavelength, and a second configuration, in which the terminal transmits at the second wavelength and receives at the first wavelength.

In contrast to these solutions, the invention provides a less expensive, lower parts and more reliable solution. The invention provides a way to implement a terminal which can be easily reconfigured to be able to communicate with an identical version of itself. The terminal can be deployed on aircraft or satellites to realize an airborne meshed network, which is flexible where links can be dynamically established between each pair of aircraft.

Here, the way to implement a reconfigurable terminal which can link to an identical version of itself is by using a combination of wavelength and polarization to distinguish between the Rx and the Tx channels. The light polarization is used to distinguish between the communications modes: in the first mode the terminal transmits e.g. right-handed circular polarized light and receives left-handed circular polarized light, and vice versa in the second mode. Switching between the two modes is done by rotating a quarter-wave plate by 90° or, alternatively, a half-wave plate positioned before a static quarter-lambda. The benefit of this scheme is that it allows separating the Rx and Tx beams inside the terminal using a polarizing beam splitter. It is also compatible with wavelength multiplexing.

Each terminal can have the capability to change wavelength in Tx and Rx. There is a one-to-one correspondence between the wavelength and polarization which are used for receiving or transmitting. For example, assuming 20 channels at different wavelengths λ₁ to λ₂₀ the first terminal may transmit at λ₁ to λ₁₀ using right-handed circular polarization and receive at wavelengths λ₁₁ to λ₂₀ which has left-handed circular polarization; the opposite is applicable for terminal 2. The wavelength changing can be done using control logic that is preferably implemented using an FPGA. In the above example, each terminal carries 20 SFP-modules. All Tx ports are muxed together and all Rx incoming channels are demuxed in order to connect the respective SFP port. Depending on the modes, only one of the halves of the SFP modules are used for transmission. A tunable bandpass in the Rx chain may be selected accordingly for further improving Tx/Rx isolation.

The rotation of the optical axis of the quarter-wave plate can be done either mechanically or electronically (e.g. using liquid crystals).

Which terminals use which wavelength/polarization (i.e. mode 1 or 2) can be communicated beforehand through a radiofrequency (RF) handshake. This can for instance be done by assigning a value to each terminal (alternatively may be computed from its GPS coordinates) and setting the terminal with higher value to mode 2 and the other to mode 1. It should be noted that for the sake of brevity and illustration not all terminal components are shown, in particular the fine-pointing assembly well known in the art is not shown.

A communications arrangement of two terminals usually involves the free space between the terminals and the beams propagating therein as well as optical fibers that are used within the terminal apart from the input/output assembly. The Tx ports of both terminals can be s-polarized while the Rx ports of both terminals can be p-polarized. Each terminal is able to transmit and to receive using a single wavelength or a plurality of wavelengths implemented by SFP modules controlled by FPGAs. The Tx path may comprise a multiplexer (MUX) and an Erbium doped fiber (EDFA) booster; the Rx path comprises a tunable band-pass filter, an EDFA pre-amplifier and a demultiplexer (DEMUX). The quarter-wave plate angle orientation with respect to the local reference system is preferably +45° for the upper and -45° for the lower terminal. This allows the upper terminal to transmit right-handed circular polarized light and receive left-handed circular polarized light, and vice-versa for the lower terminal. The separation in wavelength and the use of band-pass filters may be used to improve isolation between the Tx and Rx channels.

Embodiments of the invention are described in more detail with reference to the accompanying schematic drawings that are listed below:
- Fig. 1: depicts an embodiment of a free space optical communications arrangement according to the invention; and
- Fig. 2: depicts a spectrum used in the communications arrangement.

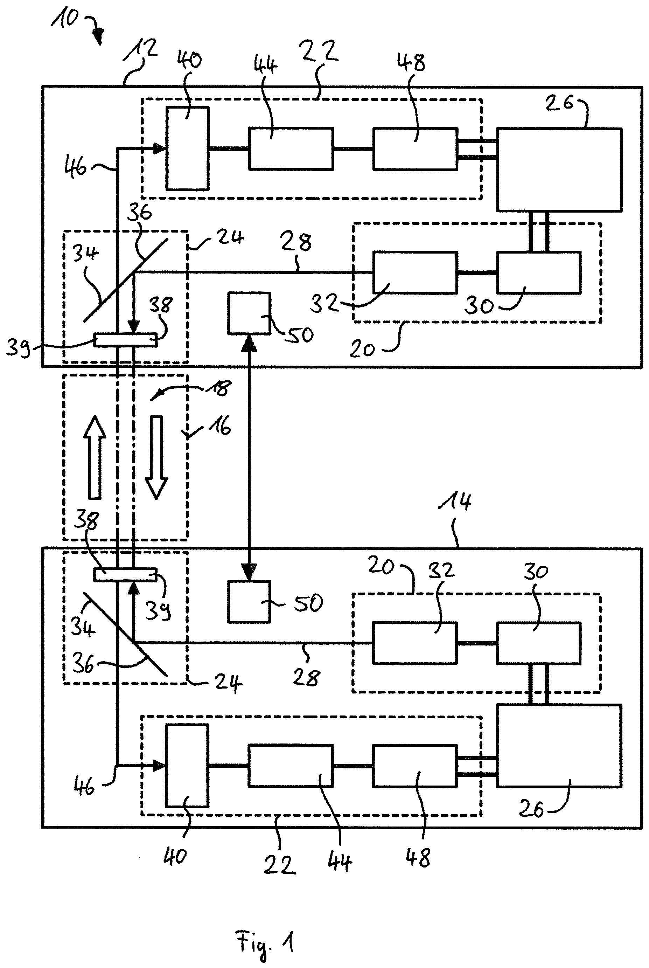

Fig. 1 illustrates an embodiment of a free space optical communication arrangement 10. The arrangement comprises a first optical communication terminal 12 and a second optical communication terminal 14. The first and second terminals 12, 14 are spaced apart with an area of free space 16 between them. The first and second terminals 12, 14 establish between themselves an optical link 18 via free space 16. The first and second optical communication terminals 12, 14 are configured identically with regard to their components so that for the sake of brevity only the first optical communication terminal 12 is described in more detail.

The first optical communication terminal 12 comprises a laser source 20, a photo detecting apparatus 22, an optical input/output assembly 24, and a control logic 26.

The control logic 26 is operatively coupled to the laser source 20, the detecting apparatus 22, and the optical input/output assembly 24 for controlling these devices.

The laser source 20 generates an outgoing beam 28. The laser source 20 includes a multiplexer 30 (MUX 30) that is coupled to the control logic 26. The MUX 30 generates laser pulses that are transferred to a laser booster amplifier 32. The laser booster amplifier 32 and the MUX 30 are connected to each other via an optical channel. The outgoing beam 28 propagates within the optical channel to the laser booster amplifier 32. The laser booster amplifier 32 is preferably operated in saturation mode, which means the outgoing laser pulses are preferably amplified to the saturated output power of the laser booster amplifier 32, e.g., an erbium doped fiber amplifier (EDFA).

The laser booster amplifier 32 emits the outgoing beam 28 which propagates further to the optical input/output assembly 24.

The optical input/output assembly 24 includes a beam splitter means 34. The beam splitter means 34 preferably includes a polarizing beam splitter 36. The beam splitter means 34 is arranged so that the outgoing beam 28 is reflected toward free space 16.

The optical input/output assembly 24 includes a polarization changing means 38, e.g., a quarter-wave plate 39. It is also possible that the polarization changing means 38 includes instead of a passive element such as the quarter-wave plate 39, an active polarization changing element such as a photo elastic modulator or the like. The polarization changing means 38 is configured such that a linear polarization is changed into a circular polarization.

The photo detecting apparatus 22 includes a tunable wavelength filter means 40. The tunable wavelength filter means 40 may include a tunable band pass filter. The tunable wavelength filter means 40 is configured to allow passage of a spectral window 42 of wavelength. The position of the spectral window 42 in the wavelength domain is controlled by the control logic 26.

The photo detecting apparatus 22 includes a laser pre-amplifier 44. The laser pre-amplifier 44 is coupled to the tunable wavelength filter means 40 via an optical fiber. The tunable wavelength filter means 40 may be implemented by using a rotating filter or a linear translation stage with multiple filters. The laser pre-amplifier 44 may be again configured as a laser fiber amplifier similar to the laser booster amplifier 32. However, the laser pre-amplifier 44 is operated in low-noise mode. In low-noise mode, the gain of the laser pre-amplifier 44 is chosen such that the incoming beam 46 is merely amplified by the amount necessary for reliably detecting incoming beam 46, thereby avoiding an increase in noise.

The photo detecting apparatus 22 includes a demultiplexer 48 (DEMUX 48) that is coupled to the laser pre-amplifier 44 again via optical fiber. The demultiplexer 48 detects incoming laser pulses of the incoming beam 46 and transmits the signals to the control logic 26. The control logic 26 is preferably realized via a programmable logic circuit, such as an FPGA or a custom designed chip.

Furthermore, the first optical communication terminal 12 may include a radio frequency transceiver 50 (RF transceiver 50) that is used in a handshake between the first optical communication terminal 12 and the second optical communication terminal 14.

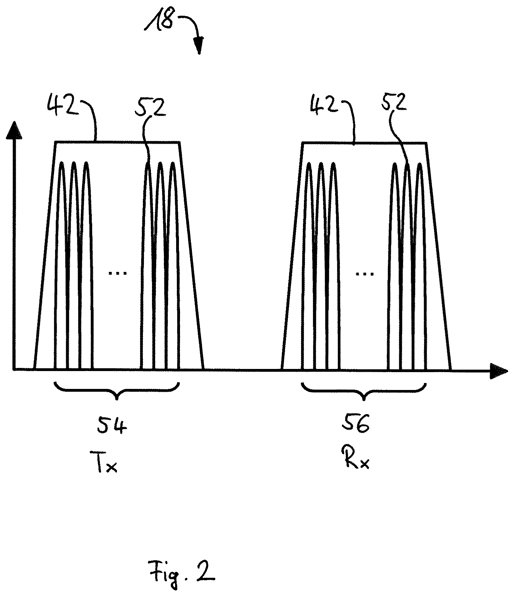

Fig. 2 depicts a typical spectrum that may be used in the communication arrangement 10. The diagram depicts on the horizontal axis wavelength and on the vertical axis intensity of the wavelengths or transmissivity of a wavelength filter (e.g. the spectral window 42 is illustrated).

As depicted schematically, the optical link 18 includes a plurality of channels 52. The channels 52 are separated into a first group 54 and a second group 56. The first group 54 may be the transmission channels Tx, while the second group 56 may be the receiving channels Rx with respect to the first optic. The diagram further depicts the spectral window 42 of the tunable wave length filter means 40 that suppresses any channels that are outside of the desired scope. In other words, the spectral window 42 is shifted towards the first group 54 or second group 56 depending on whether the first group 54 or the second group 56 is received by the second optical communication terminal 14 and vice versa.

The operation of the free space optical communication arrangement 10 will now be described in further detail with reference to both Fig. 1 and Fig. 2.

Initially, the first and second optical communication terminals 12, 14 perform a handshake using the RF transceiver 50. With this handshake, the first and second optical communication terminals 12, 14 may define for example that the first group 54 of the channels 52 is used by the first optical communication terminal 12 as transmission channels Tx whereas the second group 56 of channels 52 is used as receiving channels Rx by the first optical communication terminal 12. The opposite is defined for the second optical communication terminal 14.

A message to be sent from the first optical communication terminal 12 to the second optical communication terminal 14 may be encoded by the control logic 26 which controls the MUX 30 to emit the outgoing beam 28 with laser pulses that are modulated according to the message to be sent. The outgoing beam 28 is propagating through a fiber to the laser booster amplifier 32 which amplifies the laser pulses of the outgoing beam 28. The laser pulses are polarized in s-polarization and propagate towards the optical input/output assembly 24. The beam splitter means 34 reflects the outgoing beam 28 towards the polarization changing means 38. The polarization changing means 38 is controlled by the control logic 26 to change the outgoing beam polarization from linear polarization into circular polarization, such as right-handed circular polarization. Subsequently, the outgoing beam 28 leaves the first optical communication terminal 12 and propagates through free space 26 towards the second optical communication terminal 14.

After entering the second optical communication terminal 14, the now incoming beam 46 (with respect to the second optical communication terminal 14) enters the polarization changing means 38 which turns the right-hand circular polarization into p-polarization. The incoming beam 46 subsequently travels to the beam splitter means 34 and is transmitted by the beam splitter means 34 towards the photo detecting apparatus 22.

When entering the photo detecting apparatus 22, the incoming beam 46 passes through a tunable wavelength filter means 40 which has its spectral window 42 tuned such that all channels 52 of the first group 54 are allowed to pass, whereas all other wavelengths are suppressed. The incoming beam 46 passes through an optical fiber into the laser pre-amplifier 44. The laser pre-amplifier 44 amplifies the incoming laser pulses of the incoming beam 46 sufficiently that they can be detected by the DEMUX 48, but not much more in order to avoid an increase of noise. The amplified incoming beam 46 is passed through another fiber into the DEMUX 48 which detects the optical signals in the usual manner and the control logic 26 evaluates the received signals and outputs the message which was sent from the first optical communication terminal 12 to the second optical communication terminal 14.

Since both terminals are configured symmetrically, a second message can be transmitted from the second optical communication terminal 14 to the first optical communication terminal 12 simultaneously. As a result, the optical link 18 allows for a simultaneous bi-directional communication between the first and second optical communication terminals12, 14.

In order to improve free space optical communications, the invention proposes an optical communication terminal 12 that includes a laser source 20, a photo detecting apparatus 22 and an optical input/output assembly 24. These components are controlled by a control logic 26. In order to have the optical communication terminal 12 to be self-compatible, the optical input/output assembly 24 selectively routes the outgoing beam 28 and incoming beam 46 depending on their respective beam polarization. To this end, the optical input/output assembly 24 may include a polarizing beam splitter 36 together with a quarter-wave plate 39.

### List of reference signs:

- 10: free space optical communication arrangement
- 12: first optical communication terminal
- 14: second optical communication terminal
- 16: free space
- 18: optical link
- 20: laser source
- 22: photo detecting apparatus
- 24: input/output assembly
- 26: control logic
- 28: outgoing beam
- 30: multiplexer (MUX)
- 32: laser booster amplifier
- 34: beam splitter means
- 36: polarizing beam splitter
- 38: polarization changing means
- 39: quarter-wave plate
- 40: tunable wavelength filter means
- 42: spectral window
- 44: laser pre-amplifier
- 46: incoming beam
- 48: demultiplexer (DEMUX)
- 50: radio frequency transceiver (RF transceiver)
- 52: channel
- 54: first group
- 56: second group

- Tx: transmission channel
- Rx: receiving channel

## Claims

1. A free space optical communication terminal (12) configured for establishing an optical link (18) to another communication terminal (14) through free space (16), the free space optical communication terminal (12) comprising:
- a laser source (20) that is configured for generating an outgoing beam (28) of outgoing laser pulses, wherein the outgoing beam (28) is to be transmitted from the laser source (20) via free space (16) to the other communication terminal (14);
- a photo detecting apparatus (22) that is configured for detecting an incoming beam (46) of incoming laser pulses, wherein the incoming beam (46) is incoming from the other communication terminal (14);
- an optical input/output assembly (24) that is configured for selectively routing the incoming beam (46) and the outgoing beam (28) based on their respective beam polarization such that the incoming beam (46) is routed to the photo detecting apparatus (22) and the outgoing beam (46) is routed from the laser source (20) towards free space (16); and
- a control logic (26) that is operatively coupled to the laser source (20), the photo detecting apparatus (22) and/or the optical input/output assembly (24),
**characterized in that** the photo detecting apparatus (22) comprises a photo detector and a tunable wavelength filter means (40) that is arranged along the path of the incoming beam (46) before the photo detector, wherein the tunable wavelength filter means (40) is configured to allow passage of a tunable spectral window (42) of wavelengths, wherein the optical input/output assembly (24) includes another tunable wavelength filter means (40) that is arranged along the path of the outgoing beam (28) before free space (16), wherein the other tunable wavelength filter means (40) is configured to allow passage of a tunable spectral window (42) of wavelengths, wherein the optical communication terminal (12) further comprises a radio frequency transceiver (50) that is operatively coupled to the control logic (26) for enabling handshake with the other communication terminal (14) by communicating beforehand which optical communication terminal (12, 14) uses which wavelength/polarization pair.

2. The optical communication terminal (12) according to claim 1, wherein the optical input/output assembly (24) includes a beam splitter means (34) that is configured such that the outgoing beam (28) is routed from the laser source (20) towards free space (16) and that the incoming beam (46) is routed from free space (16) towards the photo detecting apparatus (22) depending on the respective beam polarization.

3. The optical communication terminal (12) according to any of the preceding claims, wherein the laser source (20) is configured for generating the outgoing beam (46) with linear polarization, wherein the optical input/output assembly (24) is configured for changing an outgoing beam (28) polarization from a first linear polarization to a first elliptical or circular polarization and for changing an incoming beam (46) polarization from a second elliptical or circular polarization to a second linear polarization, wherein the second linear polarization is different from the first linear polarization.

4. The optical communication terminal (12) according to claim 3, wherein the optical input/output assembly (24) includes a polarization changing means that is configured such that the outgoing beam (28) polarization is changed from the first linear polarization to the first elliptical or circular polarization and that the incoming beam (46) polarization is changed from the second elliptical or circular polarization to the second linear polarization.

5. The optical communication terminal (12) according to any of the preceding claims, wherein the optical link (18) includes a plurality of channels (52) that are defined by different central wavelengths of the laser pulses, wherein the laser source (20) is configured to generate the outgoing beam (28) having laser pulses with different central wavelengths.

6. The optical communication terminal (12) according to any of the preceding claims, wherein the laser source (20) includes a laser booster amplifier (32) that is configured to operate in saturation mode, in order to amplify the outgoing laser pulses.

7. The optical communication terminal (12) according to any of the preceding claims, wherein the photo detecting apparatus (22) includes a laser pre-amplifier (44) that is configured to operate in low-noise mode, in order to amplify the incoming laser pulses while adding a minimum of noise.

8. A free space optical communications arrangement (10) comprising a first free space optical communication terminal (12) and a second free space optical communication terminal (14), wherein both terminals (12, 14) are configured according to any of the preceding claims.

9. A free space optical communication method between a first free space optical communication terminal (12) and a second free space optical communication terminal (14) that are configured according to any of the claims 1 to 7, the method comprising:
- generating an outgoing beam (28) of outgoing laser pulses, wherein the outgoing beam (28) is to be transmitted via free space (16) to the second free space optical communication terminal (14);
- detecting an incoming beam (46) of incoming laser pulses, wherein the incoming beam (46) is the outgoing beam (28) that is incoming from the first free space optical communication terminal (12);
- selectively routing the incoming beam (46) to the photo detecting apparatus (22) or the outgoing beam (46) from the laser source (20) towards free space (16) based on their respective beam polarization,
**characterized in that** the laser source (20) generates the outgoing beam (28) having laser pulses with a different central wavelength for each channel of the optical link, and in the photo detecting apparatus (22) a tunable wavelength filter means (40) is tuned to allow passage of a tunable spectral window (42) of wavelengths of the incoming beam (46), wherein the optical input/output assembly (24) includes another tunable wavelength filter means (40) that is tuned to allow passage of a tunable spectral window (42) of wavelengths of the outgoing beam (28), wherein a handshake between both terminals (12, 14) is performed by a radio transmission and by communicating beforehand which optical communication terminal (12, 14) uses which wavelength/polarization pair.

10. The method according to claim 9, wherein the outgoing beam (28) is reflected towards free space (16) and the incoming beam (46) is transmitted from free space (16) by a beam splitter means (34).

11. The method according to any of the claims 9 or 10, wherein the laser source (20) generates the outgoing beam (28) with linear polarization and the optical input/output assembly (24) changes an outgoing beam (28) polarization from a first linear polarization to a first elliptical or circular polarization and changes an incoming beam (46) polarization from a second elliptical or circular polarization to a second linear polarization, wherein the second linear polarization is different from the first linear polarization.

12. The method according to any of the claims 9 to 11, wherein the laser source (20) generates the outgoing beam (28) having laser pulses with a different central wavelength for each channel (52) of the optical link (18), and in the photo detecting apparatus (22) a tunable wavelength filter means (40) is tuned to allow passage of a tunable spectral window (42) of wavelengths of the incoming beam (28).

## Patentansprüche

1. Endgerät zur optischen Freiraumkommunikation (12), das zum Herstellen einer optischen Verbindung (18) zu einem anderen Kommunikationsendgerät (14) durch den Freiraum (16) ausgestaltet ist, wobei das Endgerät zur optischen Freiraumkommunikation (12) umfasst:
- eine Laserquelle (20), die zum Generieren eines abgehenden Strahls (28) von abgehenden Laserpulsen ausgestaltet ist, wobei der abgehende Strahl (28) von der Laserquelle (20) über den Freiraum (16) zu dem anderen Kommunikationsendgerät (14) zu übertragen ist;
- eine Fotodetektionseinrichtung (22), die zum Detektieren eines eingehenden Strahls (46) von eingehenden Laserpulsen ausgestaltet ist, wobei der eingehende Strahl (46) von dem anderen Kommunikationsendgerät (14) eingeht;
- eine optische Eingabe/Ausgabe-Baugruppe (24), die zum selektiven Routen des eingehenden Strahls (46) und des abgehenden Strahls (28) basierend auf ihrer jeweiligen Strahlpolarisation ausgestaltet ist, so dass der eingehende Strahl (46) zu der Fotodetektionseinrichtung (22) geroutet wird und der abgehende Strahl (46) von der Laserquelle (20) zu dem Freiraum (16) geroutet wird; und
- eine Steuerlogik (26), die operativ mit der Laserquelle (20), der Fotodetektionseinrichtung (22) und/oder der optischen Eingabe/Ausgabe-Baugruppe (24) gekoppelt ist,
**dadurch gekennzeichnet, dass** die Fotodetektionseinrichtung (22) einen Fotodetektor und ein abstimmbares Wellenlängenfiltermittel (40) umfasst, das entlang des Pfads des eingehenden Strahls (46) vor dem Fotodetektor angeordnet ist, wobei das abstimmbare Wellenlängenfiltermittel (40) dazu ausgestaltet ist, Durchgang eines abstimmbaren Spektralfensters (42) von Wellenlängen zu ermöglichen, wobei die optische Eingabe/Ausgabe-Baugruppe (24) ein anderes abstimmbares Wellenlängenfiltermittel (40) einschließt, das entlang des Pfades des abgehenden Strahls (28) vor dem Freiraum (16) angeordnet ist, wobei das andere abstimmbare Wellenlängenfiltermittel (40) dazu ausgestaltet ist, Durchgang eines abstimmbaren Spektralfensters (42) von Wellenlängen zu ermöglichen, wobei das Endgerät zur optischen Kommunikation (12) ferner einen Hochfrequenz-Sendeempfänger (50) umfasst, der operativ mit der Steuerlogik (26) gekoppelt ist, um einen Handshake mit dem anderen Kommunikationsendgerät (14) zu ermöglichen, indem zuvor kommuniziert wird, welches Endgerät zur optischen Kommunikation (12, 14) welches Wellenlänge/Polarisationspaar verwendet.

2. Endgerät zur optischen Kommunikation (12) nach Anspruch 1, wobei die optische Eingabe/Ausgabe-Baugruppe (24) ein Strahlteilermittel (34) einschließt, das so ausgestaltet ist, dass der abgehende Strahl (28) von der Laserquelle (20) in Richtung des Freiraums (16) geroutet wird, und dass der eingehende Strahl (46) in Abhängigkeit von der jeweiligen Strahlpolarisation von dem Freiraum (16) in Richtung der Fotodetektionseinrichtung (22) geroutet wird.

3. Endgerät zur optischen Kommunikation (12) nach einem der vorhergehenden Ansprüche, wobei die Laserquelle (20) zum Generieren des abgehenden Strahls (46) mit linearer Polarisation ausgestaltet ist, wobei die optische Eingabe/Ausgabe-Baugruppe (24) zum Ändern einer Polarisation des abgehenden Strahls (28) von einer ersten linearen Polarisation zu einer ersten elliptischen oder kreisförmigen Polarisation und zum Ändern einer Polarisation des eingehenden Strahls (46) von einer zweiten elliptischen oder kreisförmigen Polarisation zu einer zweiten linearen Polarisation ausgestaltet ist, wobei sich die zweite lineare Polarisation von der ersten linearen Polarisation unterscheidet.

4. Endgerät zur optischen Kommunikation (12) nach Anspruch 3, wobei die optische Eingabe/Ausgabe-Baugruppe (24) ein Polarisationsänderungsmittel einschließt, das so ausgestaltet ist, dass die Polarisation des abgehenden Strahls (28) von der ersten linearen Polarisation zu der ersten elliptischen oder kreisförmigen Polarisation geändert wird, und dass die Polarisation des eingehenden Strahls (46) von der zweiten elliptischen oder kreisförmigen Polarisation zu der zweiten linearen Polarisation geändert wird.

5. Endgerät zur optischen Kommunikation (12) nach einem der vorhergehenden Ansprüche, wobei die optische Verbindung (18) eine Vielzahl von Kanälen (52) einschließt, die durch unterschiedliche zentrale Wellenlängen der Laserpulse definiert sind, wobei die Laserquelle (20) dazu ausgestaltet ist, den abgehenden Strahl (28) mit Laserpulsen mit unterschiedlichen zentralen Wellenlängen zu generieren.

6. Endgerät zur optischen Kommunikation (12) nach einem der vorhergehenden Ansprüche, wobei die Laserquelle (20) einen Laser-Boosterverstärker (32) einschließt, der dazu ausgestaltet ist, im Sättigungsmodus zu arbeiten, um die abgehenden Laserpulse zu verstärken.

7. Endgerät zur optischen Kommunikation (12) nach einem der vorhergehenden Ansprüche, wobei die Fotodetektionseinrichtung (22) einen Laser-Vorverstärker (44) einschließt, der dazu ausgestaltet ist, im rauscharmen Modus zu arbeiten, um die eingehenden Laserpulse zu verstärken, während ein Minimum an Rauschen hinzugefügt wird.

8. Anordnung zur optische Freiraumkommunikation (10), die ein erstes Endgerät zur optischen Freiraumkommunikation (12) und ein zweites Endgerät zur optischen Freiraumkommunikation (14) umfasst, wobei beide Endgeräte (12, 14) nach einem der vorhergehenden Ansprüche ausgestaltet sind.

9. Verfahren zur optischen Freiraumkommunikation zwischen einem ersten Endgerät zur optischen Freiraumkommunikation (12) und einem zweiten Endgerät zur optischen Freiraumkommunikation (14), die gemäß einem der Ansprüche 1 bis 7 ausgestaltet sind, wobei das Verfahren umfasst:
- Generieren eines abgehenden Strahls (28) von abgehenden Laserpulsen, wobei der abgehende Strahl (28) über den Freiraum (16) zu dem zweiten Endgerät zur optischen Freiraumkommunikation (14) zu übertragen ist;
- Detektieren eines eingehenden Strahls (46) eingehender Laserpulse, wobei der eingehende Strahl (46) der abgehende Strahl (28) ist, der von dem ersten Endgerät zur optischen Freiraumkommunikation (12) eingeht;
- selektives Routen des eingehenden Strahls (46) zu der Fotodetektionseinrichtung (22) oder des abgehenden Strahls (46) von der Laserquelle (20) in Richtung Freiraum (16) basierend auf ihrer jeweiligen Strahlpolarisation,
**dadurch gekennzeichnet, dass** die Laserquelle (20) den abgehenden Strahl (28) mit Laserpulsen mit einer unterschiedlichen zentralen Wellenlänge für jeden Kanal der optischen Verbindung generiert, und in der Fotodetektionseinrichtung (22) ein abstimmbares Wellenlängenfiltermittel (40) abgestimmt ist, um Durchgang eines abstimmbaren Spektralfensters (42) von Wellenlängen des eingehenden Strahls (46) zu ermöglichen, wobei die optische Eingabe/Ausgabe-Baugruppe (24) ein anderes abstimmbares Wellenlängenfiltermittel (40) einschließt, das abgestimmt ist, um Durchgang eines abstimmbaren Spektralfensters (42) von Wellenlängen des abgehenden Strahls (28) zu ermöglichen, wobei ein Handshake zwischen beiden Endgeräten (12, 14) durch eine Funkübertragung und durch vorab erfolgenden Kommunizieren durchgeführt wird, welches optische Kommunikationsendgerät (12, 14) welches Wellenlängen/Polarisationspaar verwendet.

10. Verfahren nach Anspruch 9, wobei der abgehende Strahl (28) in Richtung des Freiraums (16) reflektiert wird und der eingehende Strahl (46) von einem Strahlteilermittel (34) aus dem Freiraum (16) übertragen wird.

11. Verfahren nach einem der Ansprüche 9 oder 10, wobei die Laserquelle (20) den abgehenden Strahl (28) mit linearer Polarisation generiert, und die optische Eingabe/Ausgabe-Baugruppe (24) eine Polarisation des abgehenden Strahls (28) von einer ersten linearen Polarisation zu einer ersten elliptischen oder kreisförmigen Polarisation ändert und eine Polarisation des eingehenden Strahls (46) von einer zweiten elliptischen oder kreisförmigen Polarisation zu einer zweiten linearen Polarisation ändert, wobei sich die zweite lineare Polarisation von der ersten linearen Polarisation unterscheidet.

12. Verfahren nach einem der Ansprüche 9 bis 11, wobei die Laserquelle (20) den abgehenden Strahl (28) mit Laserpulsen mit einer unterschiedlichen zentralen Wellenlänge für jeden Kanal (52) der optischen Verbindung (18) generiert, und in der Fotodetektionseinrichtung (22) ein abstimmbares Wellenlängenfiltermittel (40) abgestimmt wird, um Durchgang eines abstimmbaren Spektralfensters (42) von Wellenlängen des eingehenden Strahls (28) zu ermöglichen.

## Revendications

1. Terminal de communication optique en espace libre (12) conçu pour établir une liaison optique (18) avec un autre terminal de communication (14) à travers l'espace libre (16), le terminal de communication optique en espace libre (12) comprenant :
- une source laser (20) qui est conçue pour générer un faisceau sortant (28) d'impulsions laser sortantes, le faisceau sortant (28) devant être transmis depuis la source laser (20) par le biais de l'espace libre (16) à l'autre terminal de communication (14) ;
- un appareil de photodétection (22) qui est conçu pour détecter un faisceau entrant (46) d'impulsions laser entrantes, le faisceau entrant (46) arrivant de l'autre terminal de communication (14) ;
- un ensemble d'entrée/sortie optique (24) qui est conçu pour acheminer sélectivement le faisceau entrant (46) et le faisceau sortant (28) sur la base de leur polarisation de faisceau respective de telle sorte que le faisceau entrant (46) est acheminé jusqu'à l'appareil de photodétection (22) et le faisceau sortant (46) est acheminé depuis la source laser (20) vers l'espace libre (16) ; et
- une logique de commande (26) qui est fonctionnellement couplée à la source laser (20), à l'appareil de photodétection (22) et/ou à l'ensemble d'entrée/sortie optique (24),
**caractérisé en ce que** l'appareil de photodétection (22) comprend un photodétecteur et un moyen de filtrage de longueur d'onde réglable (40) qui est disposé le long du trajet du faisceau entrant (46) avant le photodétecteur, le moyen de filtrage de longueur d'onde réglable (40) étant conçu pour permettre le passage d'une fenêtre spectrale réglable (42) de longueurs d'onde, l'ensemble d'entrée/sortie optique (24) comportant un autre moyen de filtrage de longueur d'onde réglable (40) qui est disposé le long du trajet du faisceau sortant (28) avant l'espace libre (16), l'autre moyen de filtrage de longueur d'onde réglable (40) étant conçu pour permettre le passage d'une fenêtre spectrale réglable (42) de longueurs d'onde, le terminal de communication optique (12) comprenant en outre un émetteur-récepteur radiofréquence (50) qui est fonctionnellement couplé à la logique de commande (26) pour permettre l'établissement d'une liaison avec l'autre terminal de communication (14) en communiquant à l'avance quel terminal de communication optique (12, 14) utilise quelle paire longueur d'onde/polarisation.

2. Terminal de communication optique (12) selon la revendication 1, dans lequel l'ensemble d'entrée/sortie optique (24) comporte un moyen de séparation de faisceau (34) qui est conçu de telle sorte que le faisceau sortant (28) est acheminé depuis la source laser (20) vers l'espace libre (16) et que le faisceau entrant (46) est acheminé depuis l'espace libre (16) vers l'appareil de photodétection (22) en fonction de la polarisation de faisceau respective.

3. Terminal de communication optique (12) selon l'une quelconque des revendications précédentes, dans lequel la source laser (20) est conçue pour générer le faisceau sortant (46) avec une polarisation linéaire, dans lequel l'ensemble d'entrée/sortie optique (24) est conçu pour faire passer la polarisation du faisceau sortant (28) d'une première polarisation linéaire à une première polarisation elliptique ou circulaire et pour faire passer la polarisation du faisceau entrant (46) d'une deuxième polarisation elliptique ou circulaire à une deuxième polarisation linéaire, dans lequel la deuxième polarisation linéaire est différente de la première polarisation linéaire.

4. Terminal de communication optique (12) selon la revendication 3, dans lequel l'ensemble d'entrée/sortie optique (24) comporte un moyen de modification de polarisation qui est conçu de telle sorte que la polarisation du faisceau sortant (28) est passée de la première polarisation linéaire à la première polarisation elliptique ou circulaire et que la polarisation du faisceau entrant (46) est passée de la deuxième polarisation elliptique ou circulaire à la deuxième polarisation linéaire.

5. Terminal de communication optique (12) selon l'une quelconque des revendications précédentes, dans lequel la liaison optique (18) comporte une pluralité de canaux (52) qui sont définis par différentes longueurs d'onde centrales des impulsions laser, la source laser (20) étant conçue pour générer le faisceau sortant (28) comportant des impulsions laser avec différentes longueurs d'onde centrales.

6. Terminal de communication optique (12) selon l'une quelconque des revendications précédentes, dans lequel la source laser (20) comporte un amplificateur de puissance laser (32) qui est conçu pour fonctionner en mode saturation afin d'amplifier les impulsions laser sortantes.

7. Terminal de communication optique (12) selon l'une quelconque des revendications précédentes, dans lequel l'appareil de photodétection (22) comporte un préamplificateur laser (44) qui est conçu pour fonctionner en mode faible bruit afin d'amplifier les impulsions laser entrantes tout en ajoutant un minimum de bruit.

8. Agencement de communication optique en espace libre (10) comprenant un premier terminal de communication optique en espace libre (12) et un deuxième terminal de communication optique en espace libre (14), les deux terminaux (12, 14) étant conçus selon l'une quelconque des revendications précédentes.

9. Procédé de communication optique en espace libre entre un premier terminal de communication optique en espace libre (12) et un deuxième terminal de communication optique en espace libre (14) qui sont conçus selon l'une quelconque des revendications 1 à 7, le procédé comprenant :
- la génération d'un faisceau sortant (28) d'impulsions laser sortantes, le faisceau sortant (28) devant être transmis par le biais de l'espace libre (16) au deuxième terminal de communication optique en espace libre (14) :
- la détection d'un faisceau entrant (46) d'impulsions laser entrantes, le faisceau entrant (46) étant le faisceau sortant (28) qui arrive du premier terminal de communication optique en espace libre (12) :
- l'acheminement sélectif du faisceau entrant (46) jusqu'à l'appareil de photodétection (22) ou du faisceau sortant (46) depuis la source laser (20) vers l'espace libre (16) sur la base de leur polarisation de faisceau respective,
**caractérisé en ce que** la source laser (20) génère le faisceau sortant (28) comportant des impulsions laser avec une longueur d'onde centrale différente pour chaque canal de la liaison optique, et dans l'appareil de photodétection (22), un moyen de filtrage de longueur d'onde réglable (40) est réglé pour permettre le passage d'une fenêtre spectrale réglable (42) de longueurs d'onde du faisceau entrant (46), l'ensemble d'entrée/sortie optique (24) comportant un autre moyen de filtrage de longueur d'onde réglable (40) qui est réglé pour permettre le passage d'une fenêtre spectrale réglable (42) de longueurs d'onde du faisceau sortant (28), l'établissement d'une liaison entre les deux terminaux (12, 14) étant effectué par une transmission radio et en communiquant à l'avance quel terminal de communication optique (12, 14) utilise quelle paire longueur d'onde/polarisation.

10. Procédé selon la revendication 9, dans lequel le faisceau sortant (28) est réfléchi vers l'espace libre (16) et le faisceau entrant (46) est transmis depuis l'espace libre (16) par un moyen de séparation de faisceau (34).

11. Procédé selon l'une quelconque des revendications 9 et 10, dans lequel la source laser (20) génère le faisceau sortant (28) avec une polarisation linéaire et l'ensemble d'entrée/sortie optique (24) fait passer la polarisation du faisceau sortant (28) d'une première polarisation linéaire à une première polarisation elliptique ou circulaire et fait passer la polarisation du faisceau entrant (46) d'une deuxième polarisation elliptique ou circulaire à une deuxième polarisation linéaire, la deuxième polarisation linéaire étant différente de la première polarisation linéaire.

12. Procédé selon l'une quelconque des revendications 9 à 11, dans lequel la source laser (20) génère le faisceau sortant (28) comportant des impulsions laser avec une longueur d'onde centrale différente pour chaque canal (52) de la liaison optique (18), et dans l'appareil de photodétection (22), un moyen de filtrage de longueur d'onde réglable (40) est réglé pour permettre le passage d'une fenêtre spectrale réglable (42) de longueurs d'onde du faisceau entrant (28).
